# EUROPEAN PATENT SPECIFICATION

(11) **EP 1 265 411 B1**
(45) Date of publication and mention of the grant of the patent: **18.04.2007**
(21) Application number: 01114041.5
(22) Date of filing: 08.06.2001
(51) Int. Cl.: H04L 27/26

(54) **MULTICARRIER SYSTEM WITH ADAPTIVE BIT-WISE INTERLEAVING**
MEHRTRÄGERSYSTEM MIT ADAPTIVER BITWEISER VERSCHACHTELUNG
SYSTEME A PORTEUSES MULTIPLES AVEC ENTRELACEMENT AU NIVEAU DU BIT ADAPTIVE

(43) Date of publication of application: 11.12.2002
(73) Proprietor: Sony Deutschland GmbH, 10785 Berlin (DE)
(72) Inventor: Wang, Zhaocheng, Sony International (Europe) GmbH, 70327 Stuttgart (DE); Stirling-Gallacher, Richard, Sony International, 70327 Stuttgart (DE)
(74) Representative: Rupp, Christian

(56) References cited:
- US-A- 5 425 051
- US-A- 6 125 150
- US-E- R E36 430
- WANG Z ET AL: "Improving performance of multi-user OFDM systems using bit-wise interleaver" ELECTRONICS LETTERS, 13 SEPT. 2001, IEE, UK, vol. 37, no. 19, pages 1173-1174, XP002180343 ISSN: 0013-5194

## Description

The present invention relates to a method for transmitting data in an orthogonal frequency division multiplex system (OFDM System). The present invention relates further to a transmitting station and a receiving station for carrying out this method.

The so-called orthogonal frequency division multiplex system (OFDM system) is widely used in broadcast systems like Digital Audio Broadcasting (DAB) and Digital Video Broadcasting (DVB) as e.g. described in EN 300 744 V1.2.1 of ETSI (European Telecommunication Standards Institute). This transmission system is also recommended for future wireless communication systems like BRAN (Broadband Radio Access Networks) and HIPERLAN (High Performance Radio Local Area Networks) as described in ETSI TS 101 475 V1.1.1 in order to provide high data rate services. Within these systems, the introduction of a bit-wise interleaver has increased the performance for high-level modulation schemes (e.g. 16QAM, 64QAM, Quadrature Amplitude Modulation), which are required for data transmission at a high-transfer rate.

A bit-wise interleaver interleaves consecutive and adjacent, respectively, bits of a data stream in a way, that adjacent bits of the data stream are transmitted in non-adjacent time slots and subcarriers, respectively. This has the advantage that associated transfer functions of respective consecutive bits (i.e. subcarrier and/or time slot number) are uncorrelated. In other words, particularly negative properties like e.g. deep fading of a specific transfer channel, do not take effect on consecutive bits, but rather only on single bits, e.g. of one transmitted symbol.

In wireless multi-user OFDM systems like e.g. BDMA systems (Band Division Multiple Access), for each user a predefined or fixed number of subcarriers and time slots can be assigned based on the required data rate. This assignment can change pseudo-randomly across the time/frequency-grid of an OFDM transmission path. This assignment is defined as one hopping pattern for one user, where at any one time slot some predefined or fixed subcarriers are allocated.

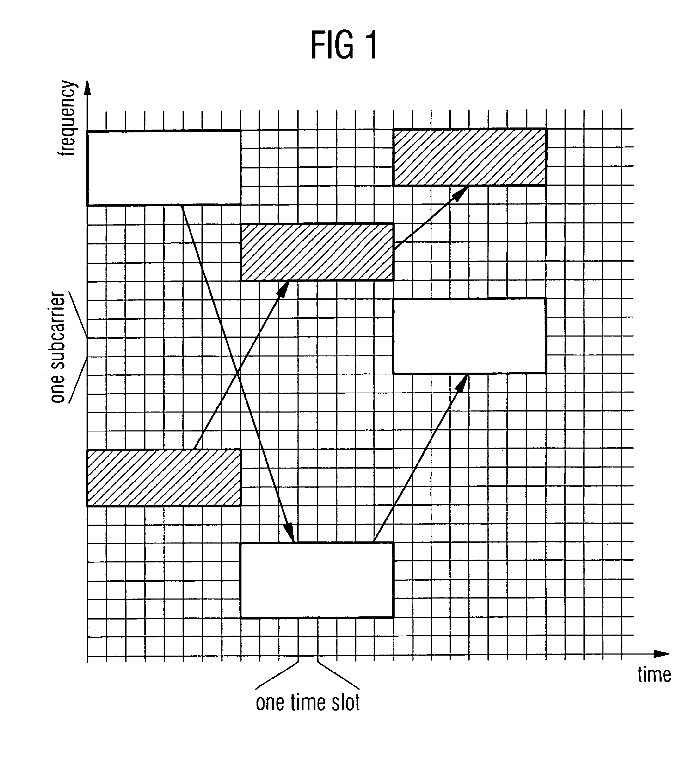

Figure 1 illustrates the transmission of data in an OFDM system with frequency hopping, whereby figure 1 shows a hopping pattern (assignment) for one user in a wireless multi-user OFDM system. Thereby, the time axis is divided into time slots of a predefined length and the frequency axis is divided into subcarriers of a predefined bandwidth.

As seen in figure 1, the data transmission for one user takes place in blocks, whereby each block has a length of a predefined number of time slots and a width of a predefined number of subcarriers. According to a hopping pattern, the (frequency) location, i.e. the frequencies occupied by a respective block within the transmitting path, of each block changes pseudo- randomly.

As shown in figure 1, the transmission of one user can also take place in more than one block within one period of time slots. This is illustrated in figure 1 as a hatched and a massive block, whereby both blocks belong to the data transmission of one user.

For each user, the respective corresponding hopping pattern can be repeated within any period of time, e.g. within one frame, one superframe or any other predefined fixed time period. In order to reduce the control burden, the hopping pattern for the respective user is assigned during a link initialisation and establishment phase and it does usually not change before the respective link (i.e. data transmission of one user) is released.

The block size, i.e. number of time slots and number of subcarriers, can be different for different users, it can also change from block to block (and between the different hopping steps, respectively) within a hopping pattern. These parameters are dependent of the required data rate and the resource management of the transmitting station (base station).

However, introducing a bit-wise interleaver in such an OFDM system, which performs frequency hopping as described in relation to figure 1, has the disadvantage, that, particularly at a relative small block size, the associated channel transfer functions can not be kept uncorrelated, since the time slot and/or subcarrier distance between the consecutive bits can not been made large enough.

Thus, due to the limited number of subcarriers at one specific time slot and the limited block size, respectively, it is difficult to implement the bit-wise interleaver according to the prior art in an OFDM frequency hopping system.

From WO 00/35102 an interleaving/de-interleaving device and a method for a communication system are known. A device for sequentially storing input bit symbols of a given interleaver size in a memory at an address and reading the stored bit symbols from the memory is provided. This known implementation method for an interleaver can be used for example based on CDMA-2000 specification or for other IMT-2000 communication systems. However, it cannot find application for the design of interleaver patterns for multi-user OFDM hopping systems.

From US 6,125,150 a transmission system using code design for transmission with periodic interleaving is known. Thereby an OFDM transmission system provides a high level of performance on a variety of frequency selective channels by using a code having the characteristics of maximum PPD and maximum PECL. The codes are designed to allow high SNR sub-channels to carry their full potential of information which is then used to compensate for information lost on low SNR sub-channels. According to this known technology error control coding, modulation and interleaver are combined together to obtain better distance characteristics, where some subcarriers may carry more information and another sub-carriers may carry less information depending on the channel transfer functions.

It is therefore the object of the present invention to provide a technique for transmitting data streams in an orthogonal frequency division multiplex system (OFDM system), whereby the performance of interleaving and therefore the performance of the transmission is improved.

The above object is achieved by a method of transmitting data streams of users via a transmission path in a OFDM system according to claim 1.

This object is further achieved by a transmitting station and a receiving station for carrying out this method according to claims 7 and 8.

The method for transmitting data streams of users via a transmission path in a OFDM system according to the present invention performs a data transmission. The time axis of the transmission path is divided into time slots The frequency axis of the transmission path is divided into subcarriers. The resource of the transmission path is used by a plurality of users. The data streams of the respective users are transmitted in blocks with a block size of a predefined length of time slots and a predefined number of subcarriers. Frequency hopping according to a predefined frequency hopping pattern for the respective transmission is performed. The frequency hopping pattern for a respective transmission can differ between different users and it also can differ between different times for the same user.

Further, the frequencies occupied by a respective block within the transmission path vary according to the frequency hopping pattern. The block size for each user within a hopping pattern can also vary. Consecutive bits of the data stream to be transmitted can be bit-wise interleaved such that consecutive bits are transmitted in non-adjacent time slots and/or subcarriers according to a predefined interleaving pattern.

According to the present invention, the respective interleaving pattern is thereby made adaptive (and can be a function of) to the respective frequency hopping pattern and/or the respective block size.

The transmitting station according to the present invention for transmitting data streams of users comprises an interleaving means for bit-wise interleaving consecutive bits of data streams according to a predefined interleaving pattern, whereby the interleaving means uses an interleaving pattern, which is made adaptive to the respective frequency hopping pattern and/or the respective block size.

The receiving station for receiving data streams of users, which are transmitted according to the above-mentioned method according to the present invention comprises an deinterleaving means for deinterleaving the received data streams into the original bit sequence according to a predefined interleaving pattern, whereby the deinterleaving means uses an interleaving pattern, which is made adaptive to the respective frequency hopping pattern and/or the respective block size.

The present invention has the advantage that the performance of high level modulation schemes, like 16QAM, 64QAM or higher, can be improved, since the bit-wise interleaving is made adaptive to the respective data transmission, i.e. the respective hopping pattern and/or block size of the respective transmission. Parasitic characteristics of respective channels are minimised, since e.g. deep fading ideally take only effect on single bits e.g. of one transmitted symbol.

Thereby, consecutive bits are transmitted within the same block, when the transmitted blocks are large enough, that means, when a block size allows to transmit consecutive bits in the same block so that the associated channel transfer functions keep uncorrelated.

Consecutive bits can also be transmitted in different blocks according to the interleaving pattern. Advantageously, consecutive bits are transmitted in different blocks, when the block size is very small, so that the associated channel transfer functions for consecutive bits can be kept uncorrelated.

Further advantageously, the interleaving pattern is made adaptive to the number of time slots of the respective block and/or the interleaving pattern is made adaptive to the number of subcarriers of the respective block.

In the following description a preferred embodiment of the present invention is explained in more detail in relation to the enclosed drawings, in which
Figure 1 shows an example of data transmission in an OFDM system with frequency hopping,
Figure 2 shows a block diagram of a wireless OFDM system according to the present invention,
Figure 3 shows a diagram of 16QAM and 64QAM mappings and the corresponding bit pattern,
Figure 4 shows one example of the mapping of one symbol into the time-frequency grid of OFDM, and
Figure 5 shows another example of the mapping of one symbol into the time-frequency grid of OFDM.

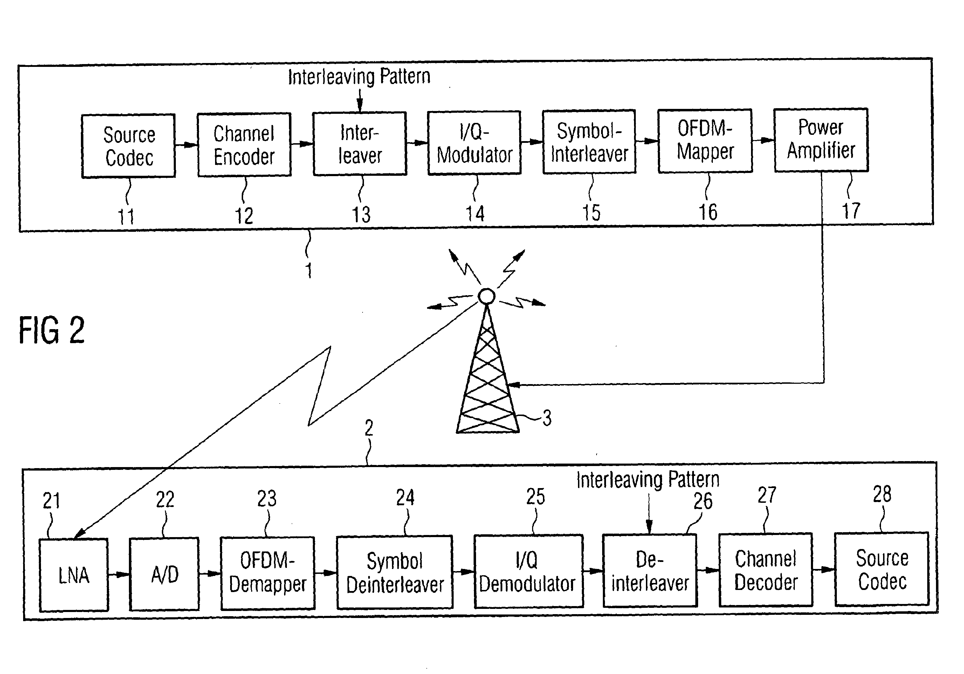

Figure 2 shows a schematic diagram of a wireless OFDM system according to the present invention, whereby a block diagram of a transmitting station 1 and a block diagram of a receiving station 2 are depicted.

The transmitting station 1 according to the present invention comprises a source codec 11 for coding the signals which have to be transmitted (e.g. audio or video signal) into a data stream of a digital signal, and a channel encoder 12 for encoding a data stream e.g. into a frame structure, adding redundancy bits, etc.

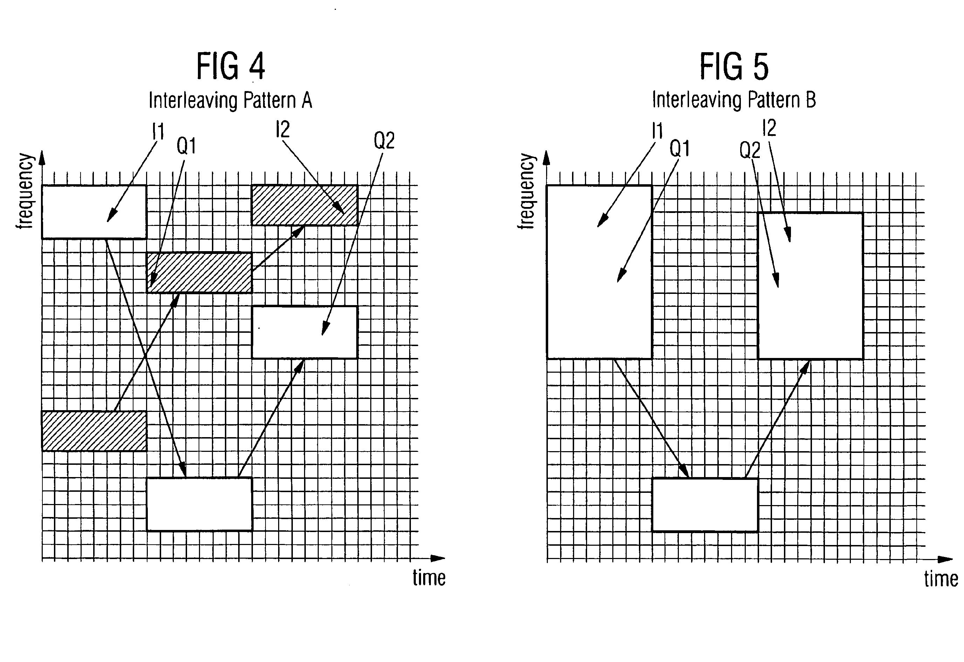

Then, the data stream is adaptively bit-wise interleaved by the interleaver 13 according to the present invention. The pattern for bit-wise interleaving the data stream is thereby made adaptive to predefined parameters of the respective transmission like frequency hopping pattern and block size. In other words, the pattern is a function of said parameters. The adaptive interleaving according to the present invention is described later in more detail with reference to Figs. 4 and 5.

After interleaving the data stream is modulated into symbols, e.g. according to the known I/Q modulation (In-phase/Quadrature modulation), by an I/Q modulator 14 and map into a time/frequency-grid by an OFDM mapper 16. Optionally, the data stream can be symbol-wise interleaved by a symbol interleaver 15 as known from the prior art in order to further improve the transmission performance.

The OFDM mapper 16 maps the modulated data stream into the time/frequency-grid according to the OFDM transmission system. Further, the OFDM mapper 16 determines the block size and the used frequency hopping pattern, both dependent e.g. upon a given users data rate and resource management in the transmitting station 1.

Then, the mapped data stream is than amplified by a power amplifier 17 and transmitted via a radio tower 3 over an air-interface to one or plurality of receiving stations.

The receiving and demodulating of data by the receiving station 2 is carried out in the inverse sequence.

Thereby, the signal transmitted by the radio tower 3 is received by an antenna comprising a low noise amplifier 21 (LNA). The received signal (comprising the data stream) is analogue/digital converted by an A/D converter 22.

Complementary to the OFDM mapper 16 of the transmitting station 1, the received signal is demapped by an OFDM demapper 23. The signal is thereby demapped according to the same pattern for mapping the data stream by the OFDM mapper 16 in order to reconstruct the original data stream.

If the signal is symbol-wise interleaved by the transmitting station 1, the signal has to be symbol-wise deinterleaved by a symbol deinterleaver 24.

After I/Q demodulation of the demapped data stream by the I/Q demodulator 25, the data stream is bit-wise deinterleaved by the deinterleaver 26. Thereby, the pattern for deinterleaving the data stream is made adaptive to the hopping pattern for mapping/demapping the signal; the pattern for bit-wise deinterleaving is similar to the interleaving pattern used by the transmitter 1 in order to get the original data stream.

Channel decoding and source decoding is performed by a channel decoder 27 and source decoder 28 similar to the source coding and channel coding of the transmitting station 1.

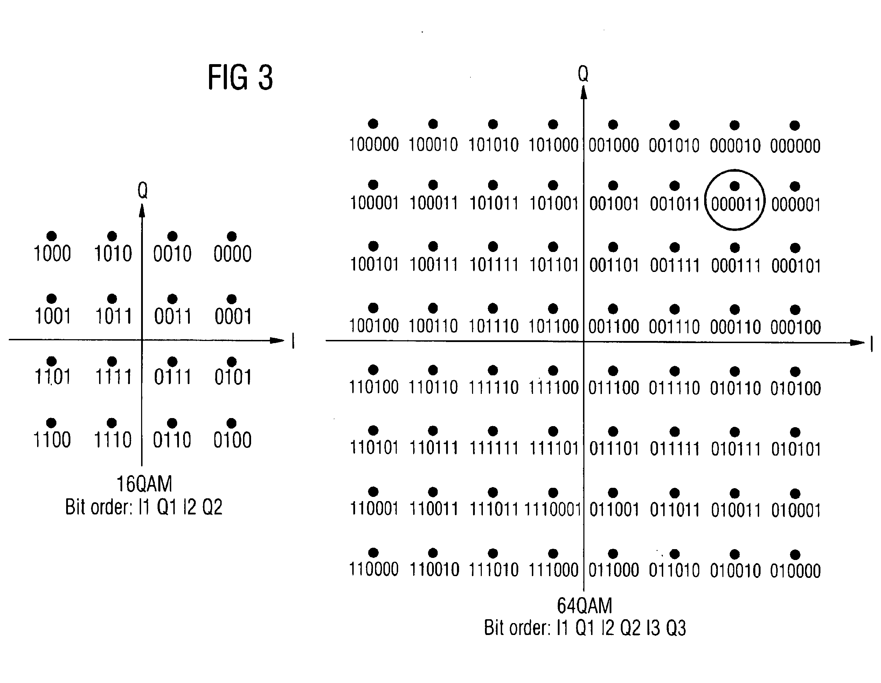

Figure 3 shows the principles of QAM (Quadrature Amplitude Modulation) based on the example of 16QAM and 64QAM.

For QAM the information is transmitted with an in-phase I and a quadrature component Q. Thus, the carrier comprises respective to the information, which are transmitted, an in-phase (I) and an quadrature (Q) component. Thereby, dependent on the modulation scheme (e.g. 16QAM or 64QAM), one transmitted symbol carries 4 bits at 16QAM (respectively 2 bits for I- and Q-channel) and 6 bit at 64QAM (respectively 3 bits for I-and Q-channel) pursuant to the scheme as shown in the respective coordinate system of 16QAM and 64QAM; the bit order is termed by I1, Q1, I2, Q2 and I1, Q1, I2, Q2, I3, Q3, respectively.

Thereby, the high priority bits are I1 and Q1. For 16QAM, the low priority bits are I2 and Q2, for 64QAM, the low priority bits are I3 and Q3. At the example of 64QAM (encircled symbol 000011) it is illustrated, that the high priority bits are less susceptible against interferences than the low priority bits. If, e.g., this symbol is interfered, it could be decoded wrongly as an adjacent symbol, e.g. as 000010, 000111, 001011 or 000001. It is seen, that the high priority bits are always the same, namely 00. Thus, the high priority bis are more protected against interferences than the low priority bits.

Figure 4 shows one example of a pattern for mapping a data stream into a time/frequency-grid by the OFDM mapper 16 shown in figure 2.

In this example, the hopping pattern for one user is shown. Thereby, each use is assigned two blocks (shown as hatched and solid blocks). Since the respective blocks are very small, i.e. low number of subcarriers in this example, consecutive bits of one symbol, e.g. I1, Q1, I2, Q2 are transmitted in different blocks, interleaved according to a bit-wise interleaving pattern A.

Figure 5 shows a different hopping pattern for mapping a data stream into the time/frequency-grid.

Thereby, the block size differs between the single hopping steps. E.g. in the first block and the third block are transmitted two consecutive bits (respectively I1, Q1 and I2, Q2), since the block size is large enough. In this case, bit-wise the interleaving happens according to an interleaving pattern B.

Thus, the design rule of a bit-wise interleaver 13 as shown in figure 1 is as follows:
- Adjacent coded bits from channel encoder are mapped onto non-adjacent subcarriers or non-adjacent time slots. The frequency separation (distance) of the chosen subcarriers or the time separation of the chosen time slot has to be far enough in order to keep the associated channel transfer functions uncorrelated.
- Adjacent coded bits from channel encoder are mapped alternatively on high or low priority bits. By this way, long runs of low reliability bits are avoided.
- The coded bits are placed at all available subcarriers and time slots on OFDM time/frequency-grid within the depth, i.e. the time/frequency/block distance between consecutive bits, of the interleaver are used.
- The bit-wise interleaver pattern is made adaptive to the hopping pattern in order to achieve better system performance.

The present invention has the advantage, that the performance of high level modulation schemes, like 16QAM, 64QAM or higher, can be improved, since the bit-wise interleaving is made adaptive to the respective data transmission, i.e. the respective hopping pattern and/or block size of the respective transmission. Parasitic characteristics of respective channels are minimised, since e.g. deep fading ideally take only effect on single bits e.g. of one transmitted symbol.

According to invention therefore a new design rule is proposed for a bit-wise interleaver for multi-user OFDM hopping systems. Instead of placing data bits belonging to one I/Q symbol or adjacent symbols on different sub-carriers at the same timeslot, data bits belonging to one I/Q symbol or adjacent symbols can be placed at different timeslots or at different blocks within the bit-wise interleaver.

Furthermore, in multi-user OFDM hopping systems, where each user can be assigned different hopping patterns (depending upon a given user's data rate and resource management in the base station) at different times, it is proposed that the practical bit-wise interleaver pattern to be used for each user is variable and depends upon its assigned hopping pattern. In this way the optimal performance can be obtained.

Each sub-carrier thereby carries the same size of information. By using a bit-wise interleaver, the bits belonging to one symbol are interleaved. Therefore, the good performance can be achieved for error control coding. Therefore, the use of a bit-wise interleaver can be enabled for multi-user OFDM hopping systems.

## Claims

1. Method for transmitting data streams of users via a transmission path in an OFDM system, whereby
the time axis of the transmission path is divided into time slots,
the frequency axis of the transmission path is divided into subcarriers,
the transmission path is used by a plurality of users,
the data streams of the respective users are transmitted in blocks with a block size of a predefined length of time slots and a predefined number of subcarriers,
frequency hopping according to a predefined frequency hopping pattern for the respective transmission is performed, whereby the frequency hopping pattern for respective transmission can differ between different users and differ between different times for the same user,
the frequencies occupied by a respective block within the transmission path vary according to the frequency hopping pattern,
the block size for each user and within a hopping pattern can vary, and
consecutive bits of the data stream to be transmitted are bit-wise interleaved, so that consecutive bits are transmitted in non-adjacent time slots and/or subcarriers according to a predefined interleaving pattern,
**characterised in**
**tha**t the respective interleaving pattern is made adaptive to the respective frequency hopping pattern and/or the respective block size.

2. Method according to claim 1,
**characterised in**
**that** consecutive bits are transmitted within the same block, in case the block size is large.

3. Method according to claim 1,
**characterised in**
**that** consecutive bits are transmitted in different blocks according to the interleaving pattern.

4. Method according to claim 3,
**characterised in**
**that** consecutive bits are transmitted in different blocks, in case the block size is small.

5. Method according to one of the claims 1 to 4,
**characterised in**
**that** the interleaving pattern is made adaptive to the number of time slots of the respective block.

6. Method according to one of the claims 1 to 5,
**characterised in**
**that** interleaving pattern is made adaptive to the number of subcarriers of the respective block.

7. Transmitting station (1) for transmitting data streams of users by using a method according to anyone of the claims 1 to 6,
**characterised by**
an interleaving means (13) for bit-wise interleaving consecutive bits of data streams according to a predefined interleaving pattern, whereby the interleaving means (13) uses an interleaving pattern, which is made adaptive to the respective frequency hopping pattern and/or the respective block size.

8. Receiving station (2) for receiving data streams of users, which are transmitted using a method for transmitting data streams according to anyone of the claims 1 to 6,
**characterised by**
a deinterleaving means (26) for deinterleaving the received data streams into the original bit sequence according to a predefined interleaving pattern, whereby the deinterleaving means uses an interleaving pattern, which is made adaptive to the respective frequency hopping pattern and/or the respective block size.

## Patentansprüche

1. Verfahren zum Senden von Datenströmen von Benutzern über einen Sendeweg bei einem OFDM-System, durch das
die Zeit-Achse des Sendewegs in Zeitschlitze geteilt wird,
die Frequenz-Achse des Sendewegs in Hilfsträger geteilt wird,
der Sendeweg durch eine Mehrzahl von Benutzern verwendet wird,
die Datenströme der jeweiligen Benutzer in Blöcken mit einer Blockgröße einer vorher definierten Länge von Zeitschlitzen und einer vorher definierten Zahl von Hilfsträgern gesendet werden,
ein Frequenzspringen gemäß einem vorher definierten Frequenzsprungmuster für die jeweilige Sendung durchgeführt wird, wobei sich das Frequenzsprungmuster für eine jeweilige Sendung zwischen unterschiedlichen Benutzern unterscheiden kann und sich zwischen unterschiedlichen Zeiten für den gleichen Benutzer unterscheiden kann,
die Frequenzen, die durch einen jeweiligen Block in dem Sendeweg eingenommen sind, gemäß dem Frequenzsprungmuster variieren,
die Blockgröße für jeden Benutzer und in einem Sprungmuster variieren kann, und
aufeinanderfolgende Bits des zu sendenden Datenstroms bitweise verschachtelt werden, derart, dass aufeinanderfolgende Bits in nicht benachbarten Zeitschlitzen und/oder Hilfsträgern gemäß einem vorher definierten Verschachtelungsmuster gesendet werden,
**dadurch gekennzeichnet,**
**dass** das jeweilige Verschachtelungsmuster an das jeweilige Frequenzsprungmuster und/oder die jeweilige Blockgröße adaptiv gemacht wird.

2. Verfahren nach Anspruch 1,
**dadurch gekennzeichnet,**
**dass** aufeinanderfolgende Bits bei einem Fall, bei dem die Blockgröße groß ist, in dem gleichen Block gesendet werden.

3. Verfahren nach Anspruch 1,
**dadurch gekennzeichnet,**
**dass** aufeinanderfolgende Bits in unterschiedlichen Blöcken gemäß dem , ., Verschachtelungsmuster gesendet werden.

4. Verfahren nach Anspruch 3,
**dadurch gekennzeichnet,**
**dass** aufeinanderfolgende Bits bei einem Fall, bei dem die Blockgröße klein ist, in unterschiedlichen Blöcken gesendet werden.

5. Verfahren nach einem der Ansprüche 1 bis 4,
**dadurch gekennzeichnet,**
**dass** das Verschachtelungsmuster an die Zahl von Zeitschlitzen des jeweiligen Blocks adaptiv gemacht wird.

6. Verfahren nach einem der Ansprüche 1 bis 5,
**dadurch gekennzeichnet,**
**dass** das Verschachtelungsmuster an die Zahl von Hilfsträgern des jeweiligen Blocks adaptiv gemacht wird.

7. Sendestation (1) zum Senden von Datenströmen von Benutzern unter Verwendung eines Verfahrens nach einem der Ansprüche 1 bis 6,
**gekennzeichnet durch**
eine Verschachtelungsmuster (13) zum bitweisen Verschachteln von aufeinanderfolgenden Bits von Datenströmen gemäß einem vorher definierten Verschachtelungsmuster, wobei die Verschachtelungseinrichtung (13) ein Verschachtelungsmuster verwendet, das an das jeweilige Frequenzsprungmuster und/oder die jeweilige Blockgröße adaptiv gemacht ist.

8. Empfangsstation (2) zum Empfangen von Datenströmen von Benutzern, die unter Verwendung eines Verfahrens zum Senden von Datenströmen nach einem der Ansprüche 1 bis 6 gesendet werden,
**gekennzeichnet durch**
eine Entschachtelungseinrichtung (26) zum Entschachteln der empfangenen Datenströme in die ursprüngliche Bitfolge gemäß einem vorher definierten Verschachtelungsmuster, wobei die Entschachtelungseinrichtung ein Verschachtelungsmuster, das an das jeweilige Frequenzsprungmuster und/oder die jeweilige Blockgröße adaptiv gemacht ist, verwendet.

## Revendications

1. Procédé de transmission de flux de données d'utilisateurs via un trajet de transmission dans un système OFDM, moyennant quoi
l'axe temporel du trajet de transmission est divisé en tranches de temps,
l'axe de fréquences du trajet de transmission est divisé en sous-porteuses,
le trajet de transmission est utilisé par une pluralité d'utilisateurs,
les flux de données des utilisateurs respectifs sont transmis en blocs avec une taille de blocs ayant une longueur prédéfinie de tranches de temps et un nombre prédéfini de sous-porteuses,
un saut de fréquence selon un modèle de saut de fréquence prédéfini pour la transmission respective est effectué, moyennant quoi le modèle de saut de fréquence pour la transmission respective peut différer entre différents utilisateurs et entre différents moments pour le même utilisateur,
les fréquences occupées par un bloc respectif sur le trajet de transmission varient selon le modèle de saut de fréquence,
la taille de blocs pour chaque utilisateur et dans un modèle de saut peut varier, et
les bits consécutifs du flux de données à transmettre sont entrelacés au niveau du bit, de telle sorte que les bits consécutifs soient transmis dans des tranches de temps non adjacentes et/ou des sous-porteuses non adjacentes selon un modèle d'entrelacement prédéfini,
**caractérisé en**
**ce que** le modèle d'entrelacement respectif est rendu adaptif au modèle de saut de fréquence respectif et/ou à la taille de blocs respective.

2. Procédé selon la revendication 1,
**caractérisé en**
**ce que** les bits consécutifs sont transmis dans le même bloc, lorsque la taille de blocs est importante.

3. Procédé selon la revendication 1,
**caractérisé en**
**ce que** les bits consécutifs sont transmis dans différents blocs selon le modèle d'entrelacement.

4. Procédé selon la revendication 3,
**caractérisé en**
**ce que** les bits consécutifs sont transmis dans différents blocs, lorsque la taille de blocs est petite.

5. Procédé selon l'une des revendications 1 à 4,
**caractérisé en**
**ce que** le modèle d'entrelacement est rendu adaptif au nombre de tranches de temps du bloc respectif.

6. Procédé selon l'une des revendications 1 à 5,
**caractérisé en**
**ce que** le modèle d'entrelacement est rendu adaptif au nombre de sous-porteuses du bloc respectif.

7. Station de transmission (1) destinée à transmettre des flux de données d'utilisateurs en utilisant un procédé selon l'une quelconque des revendications 1 à 6,
**caractérisé par**
un moyen d'entrelacement (13) destiné à entrelacer au niveau du bit les bits consécutifs de flux de données selon un modèle d'entrelacement prédéfini, moyennant quoi le moyen d'entrelacement (13) utilise un modèle d'entrelacement, qui est rendu adaptif au modèle de saut de fréquence respectif et/ou à la taille de blocs respective.

8. Station de réception (2) destinée à recevoir des flux de données d'utilisateurs, qui sont transmis en utilisant un procédé de transmission de flux de données selon l'une quelconque des revendications 1 à 6,
**caractérisée par**
un moyen de désentrelacement (26) destiné à désentrelacer les flux de données reçus en séquence binaire d'origine selon un modèle d'entrelacement prédéfini, moyennant quoi le moyen de désentrelacement utilise un modèle d'entrelacement, qui est rendu adaptif au modèle de saut de fréquence respectif et/ou à la taille de blocs respective.
